# EUROPEAN PATENT SPECIFICATION

(11) **EP 4 201 710 B1**
(45) Date of publication and mention of the grant of the patent: **13.11.2024**
(21) Application number: 22211588.3
(22) Date of filing: 06.12.2022
(51) Int. Cl.: B60C 11/12

(54) **TIRE**
REIFEN
PNEUMATIQUE

(30) Priority: 22.12.2021 JP 2021208579
(43) Date of publication of application: 28.06.2023
(73) Proprietor: SUMITOMO RUBBER INDUSTRIES, LTD., Chuo-ku, Kobe-shi, Hyogo 651-0072 (JP)
(72) Inventor: NAKAJIMA, Koichi, Kobe-shi, Hyogo, 651-0072 (JP)
(74) Representative: Winter, Brandl - Partnerschaft mbB

(56) References cited:
- EP-A2- 0 934 836
- EP-A2- 0 968 847
- EP-A2- 0 974 439
- JP-A- 2016 037 083

## Description

### BACKGROUND OF THE INVENTION

### Field of the Invention

The present invention relates to a tire having a tread portion.

### Background Art

Conventionally, a tire in which sipes are provided on a tread portion in order to improve on-snow performance and on-ice performance, is known. For example, Japanese Laid-Open Patent Publication No. 2015-030414 proposes a tire in which sipes are provided on inner middle blocks so as to form hexagons and sipes are provided on outer middle blocks so as to extend in the tire axial direction, thereby improving on-snow performance and on-ice performance.

However, the tire of Japanese Laid-Open Patent Publication No. 2015-030414 tends to have decreased stiffness due to the sipes provided on the entirety of each inner middle block, and thus further improvement is desired for braking performance thereof.
Document EP 0 394 836 A2 discloses a tire according to the preamble of claim 1. Documents EP 0 974 439 A2, EP 0 968 847 A2 and JP 2016 037083 A disclose further tires having hexagonal sipe groups.

Starting from a tire as disclosed in EP 0 394 836 A2, a main object of the present invention is to provide a tire that can have improved on-snow performance, on-ice performance, and braking performance in a well-balanced manner.

### SUMMARY OF THE INVENTION

The present invention is directed to a tire having a tread portion, wherein a hexagonal sipe group having a plurality of straight sipe pieces arranged so as to form a plurality of hexagons is provided on the tread portion, and the hexagonal sipe group includes a first depth portion and a second depth portion having a smaller depth in a tire radial direction than the first depth portion.

By having the above-described configuration, the tire of the present invention can have improved on-snow performance, on-ice performance, and braking performance in a well-balanced manner.

### BRIEF DESCRIPTION OF THE DRAWINGS

FIG. 1 is a development of a tread portion, showing an embodiment of the tire of the present invention;
FIG. 2 is an enlarged view of a block on which hexagonal sipe groups are provided;
FIG. 3 is a cross-sectional perspective view schematically showing a first depth portion;
FIG. 4 is a cross-sectional perspective view schematically showing a second depth portion; and
FIG. 5 is an enlarged view of the block upon wear.

### DETAILED DESCRIPTION

Hereinafter, an embodiment of the present invention will be described in detail with reference to the drawings.

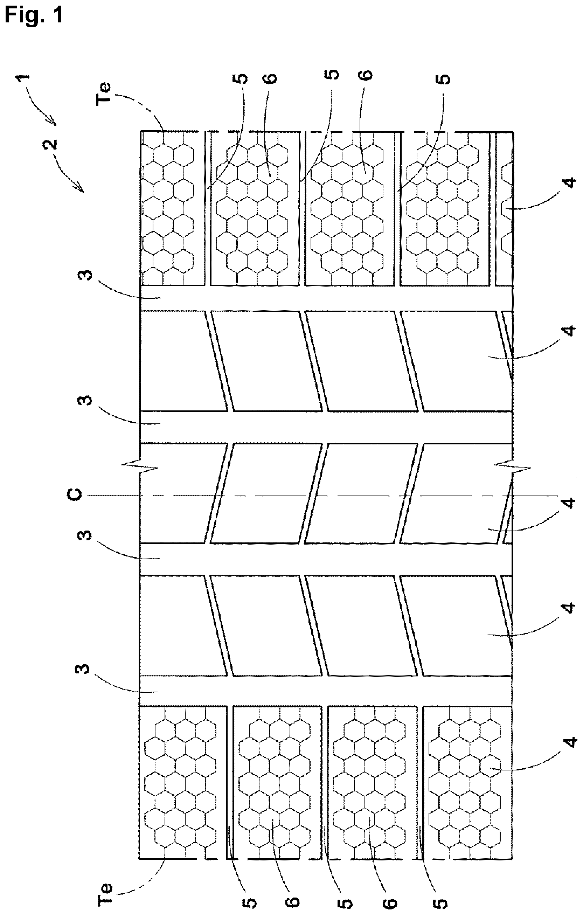

FIG. 1 is a development of a tread portion 2, showing a tire 1 of the present embodiment. As shown in FIG. 1, the tire 1 of the present embodiment has the tread portion 2 which comes into contact with a road surface during running. The tire 1 is suitable for use as, for example, a pneumatic tire for a passenger car that can be used in winter. The tire 1 is not limited to such a mode, and may be used as, for example, a heavy duty tire, a tire for a motorcycle, a non-pneumatic tire the interior of which is not filled with pressurized air, etc.

The tread portion 2 includes, for example, a plurality of circumferential grooves 3 continuously extending in the tire circumferential direction, land portions 4 demarcated by the circumferential grooves 3, and a plurality of lateral grooves 5 traversing the land portions 4 in the tire axial direction. Accordingly, each of the land portions 4 of the present embodiment is divided into a plurality of blocks 6 by the circumferential grooves 3 and the lateral grooves 5.

Such a tread portion 2 can generate a snow column shearing force with the circumferential grooves 3 and the lateral grooves 5, and the circumferential grooves 3 and the lateral grooves 5 can exhibit an edge effect. Therefore, the tread portion 2 of the present embodiment serves to improve steering stability during running on a snow road surface (hereinafter, referred to as "on-snow performance") of the tire 1 and steering stability during running on an ice road surface (hereinafter, referred to as "on-ice performance") of the tire 1.

A hexagonal sipe group 7 having a plurality of straight sipe pieces 7a arranged so as to form a plurality of hexagons H is provided on at least one of the blocks 6 of the tread portion 2 of the present embodiment. Such a tread portion 2 can exhibit an edge effect and a snow biting effect in the tire circumferential direction and the tire axial direction, and can improve the on-snow performance and the on-ice performance of the tire 1.

Here, in the present specification, a sipe is a slit having a width, of not greater than 2 mm, orthogonal to the longitudinal direction thereof. In addition, in the present specification, unless otherwise specified, dimensions and the like of components of the tire 1 are values measured in a normal state. In the case where the tire 1 is a pneumatic tire, the "normal state" is a state where the tire 1 is fitted on a normal rim and adjusted to a normal internal pressure and no load is applied to the tire 1.

The "normal rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard. If there is no standard system including a standard on which the tire 1 is based, the "normal rim" is a rim that is defined for each tire by the manufacturer or the like.

The "normal internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the tire 1 is based, the "normal internal pressure" is an air pressure that is defined for each tire by the manufacturer or the like.

The present embodiment illustrates that the hexagonal sipe group 7 is provided on each of the blocks 6 closest to tread end Te sides, but the hexagonal sipe group 7 is not limited to such a mode, and may be provided on a land portion 4 other than the above blocks 6.

Here, in the case where the tire 1 is a pneumatic tire, each tread end Te is a ground contact position at the outermost side in the tire axial direction when a normal load is applied to the tire 1 in a normal state and the tire 1 is brought into contact with a flat surface at a camber angle of 0°. A tire equator C corresponds to the center position in the tire axial direction between a pair of the tread ends Te.

The "normal load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the tire 1 is based, the "normal load" is a load that is defined for each tire by the manufacturer or the like.

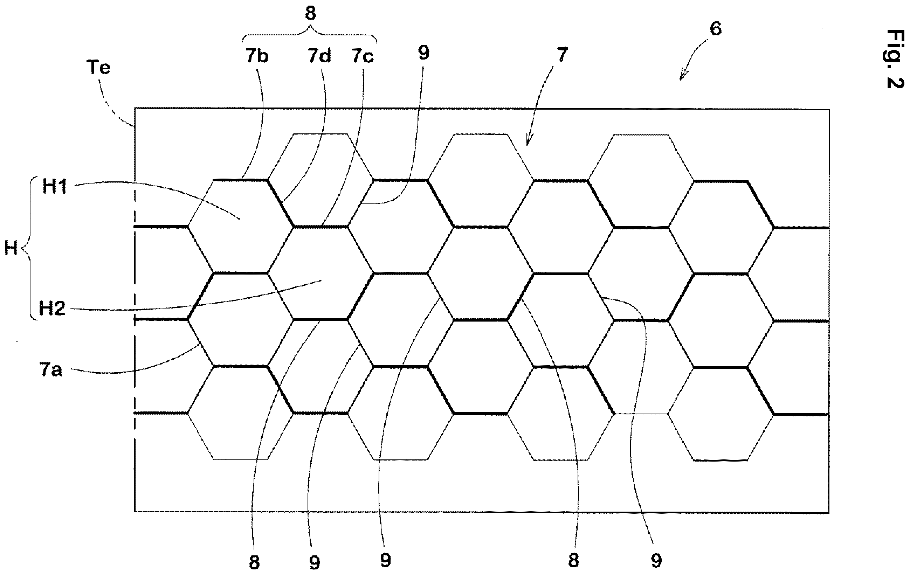

FIG. 2 is an enlarged view of the block 6 on which the hexagonal sipe groups 7 are provided. As shown in FIG. 2, each hexagonal sipe group 7 of the present embodiment includes first depth portions 8 and second depth portions 9 having a smaller depth in the tire radial direction than the first depth portions 8. In FIG. 2, for ease of understanding, the first depth portions 8 are represented by thicker lines than the second depth portions 9.

Such a hexagonal sipe group 7 can maintain high stiffness, and can improve the braking performance on a dry road surface of the tire 1. Therefore, the tire 1 of the present embodiment can have improved on-snow performance, on-ice performance, and braking performance in a well-balanced manner.

As a more preferable mode, the hexagonal sipe group 7 includes a first hexagon H1 and a second hexagon H2 adjacent to each other, as the plurality of hexagons H. The plurality of sipe pieces 7a of the present embodiment include one first sipe piece 7b forming the first hexagon H1, one second sipe piece 7c forming the second hexagon H2, and a third sipe piece 7d connecting the first sipe piece 7b and the second sipe piece 7c. The first sipe piece 7b and the second sipe piece 7c preferably extend parallel to each other. The first sipe piece 7b and the second sipe piece 7c extend in the tire axial direction, for example.

Each first depth portion 8 of the present embodiment is formed in a crank shape by the first sipe piece 7b, the second sipe piece 7c, and the third sipe piece 7d. Since each first depth portion 8 is bent in a crank shape, such a hexagonal sipe group 7 can exhibit an edge effect in the tire circumferential direction and the tire axial direction while suppressing an excessive decrease in the stiffness of the block 6. The first depth portion 8 is not limited to such a mode, and may be, for example, a portion having a large depth at a part of the sipe piece 7a.

A plurality of the first depth portions 8 are preferably arranged so as to be spaced apart from each other in the tire circumferential direction. The directions of the cranks of a pair of first depth portions 8 adjacent to each other in the tire circumferential direction of the present embodiment are opposite to each other. As for such first depth portions 8, the first depth portions 8 adjacent to each other in the tire circumferential direction are arranged so as to be displaced relative to each other in the tire axial direction. Therefore, the first depth portions 8 can suppress a decrease in the stiffness in the tire circumferential direction of the block 6 and can improve the braking performance of the tire 1.

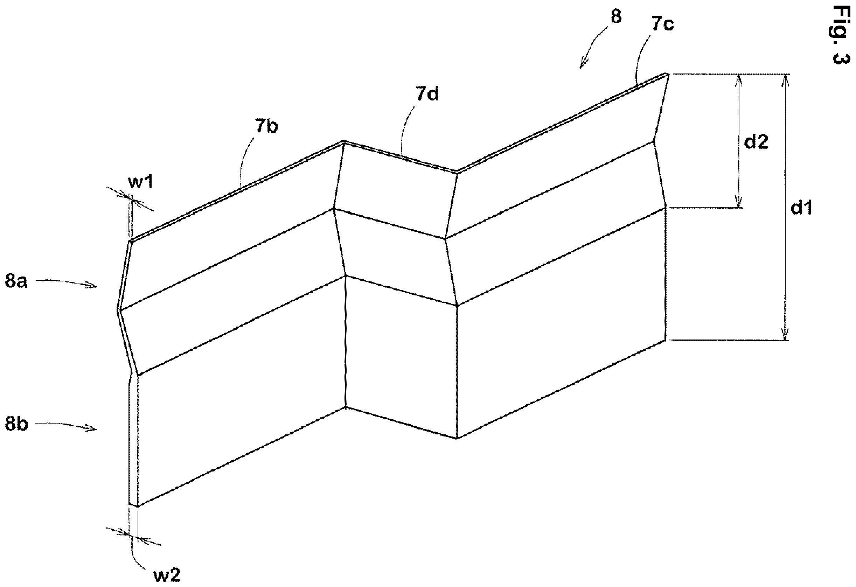

FIG. 3 is a cross-sectional perspective view schematically showing the first depth portion 8. As shown in FIG. 3, each first depth portion 8 of the present embodiment includes, in the tire radial direction, at least one bent portion 8a bent in the direction of a sipe width w1 thereof. Such first depth portions 8 can suppress a stiffness decrease by the bent portions 8a supporting each other, when a large external force is applied to the block 6, such as during braking. Each bent portion 8a may have, for example, a three-dimensional shape such as a so-called Miura fold structure.

The sipe width w1 of each bent portion 8a is preferably not greater than 0.5 mm. Such bent portions 8a can reliably support each other when a large external force is applied to the block 6, such as during braking, and can improve the braking performance of the tire 1. From such a viewpoint, the sipe width w1 of the bent portion 8a is more preferably not greater than 0.3 mm.

Each first depth portion 8 preferably includes, in the tire radial direction, a straight portion 8b extending in a straight manner on the inner side in the tire radial direction with respect to the bent portion 8a. Such a straight portion 8b can exhibit an edge effect and a snow biting effect even after the bent portion 8a disappears due to wear or the like, and can maintain the on-snow performance and the on-ice performance of the tire 1 for a long period of time.

A sipe width w2 of the straight portion 8b of the present embodiment is larger than the sipe width w1 of the bent portion 8a. Since such a straight portion 8b has the large sipe width w2, the straight portion 8b can increase a snow column shearing force upon wear, and can improve the on-snow performance of the tire 1 upon wear.

The sipe width w2 of the straight portion 8b is preferably not greater than 1.0 mm. Such a straight portion 8b can suppress an excessive decrease in the stiffness of the block 6 and can improve the on-snow performance, the on-ice performance, and the braking performance of the tire 1 upon wear in a well-balanced manner. From such a viewpoint, the sipe width w2 of the straight portion 8b is more preferably not greater than 0.7 mm.

A depth d2 of the bent portion 8a is preferably 10% to 50% of a depth d1 of the first depth portion 8. By setting the depth d2 of the bent portion 8a to be not less than 10% of the depth d1 of the first depth portion 8, the straight portion 8b can be inhibited from being excessively large, and the bent portion 8a can reliably exhibit an effect of supporting each other, so that a stiffness decrease can be suppressed. By setting the depth d2 of the bent portion 8a to be not greater than 50% of the depth d1 of the first depth portion 8, the straight portion 8b having the large sipe width w2 reliably appears when wear progresses to the extent that the second depth portion 9 disappears, so that the straight portion 8b serves to improve the on-snow performance of the tire 1 for a long period of time.

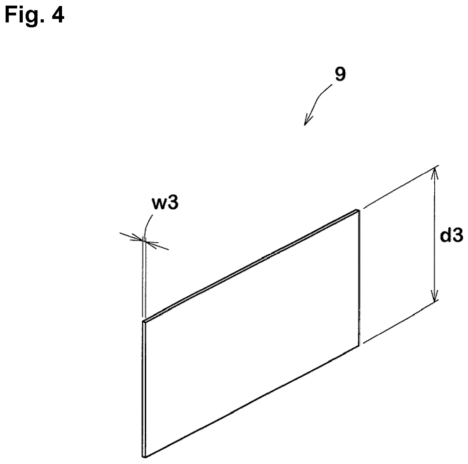

FIG. 4 is a cross-sectional perspective view schematically showing the second depth portion 9. As shown in FIG. 4, the second depth portion 9 of the present embodiment extends in a straight manner in the tire radial direction. Such a second depth portion 9 has a high snow compacting effect and can enhance a snow column shearing force.

A sipe width w3 of the second depth portion 9 is preferably not greater than 0.5 mm. Such a second depth portion 9 can exhibit an edge effect and a water absorption effect by capillary action, and can improve the on-ice performance of the tire 1. From such a viewpoint, the sipe width w3 of the second depth portion 9 is more preferably not greater than 0.3 mm.

As shown in FIG. 3 and FIG. 4, preferably, the sipe width w3 of the second depth portion 9 is substantially equal to the sipe width w1 of the bent portion 8a. Here, in the present specification, the "substantially equal to" means that a dimensional difference is within ±15%. Such a second depth portion 9 can cooperate with the bent portion 8a to exhibit an edge effect and a snow biting effect in a well-balanced manner in the tire circumferential direction and the tire axial direction.

A depth d3 of the second depth portion 9 is preferably 10% to 50% of the depth d1 of the first depth portion 8. By setting the depth d3 of the second depth portion 9 to be not less than 10% of the depth d1 of the first depth portion 8, the second depth portion 9 can be inhibited from disappearing at the initial stage of wear. By setting the depth d3 of the second depth portion 9 to be not greater than 50% of the depth d1 of the first depth portion 8, an excessive decrease in the stiffness of the block 6 can be suppressed.

Preferably, the depth d3 of the second depth portion 9 is substantially equal to the depth d2 of the bent portion 8a. In such a hexagonal sipe group 7, the straight portion 8b, of the first depth portion 8, having the large sipe width w2 appears when the second depth portion 9 disappears due to wear, so that the on-snow performance, the on-ice performance, and the braking performance of the tire 1 can be improved for a long period of time.

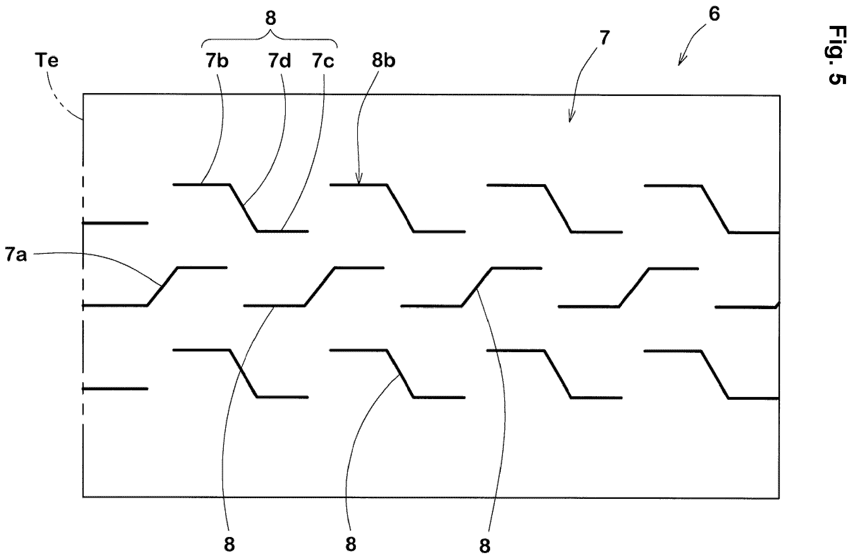

FIG. 5 is an enlarged view of the block 6 upon wear. As shown in FIG. 5, in each block 6 of the present embodiment, upon wear, the straight portions 8b of the first depth portions 8 appear, and the second depth portions 9 disappear. Since the first depth portions 8 adjacent to each other in the tire circumferential direction are arranged so as to be displaced relative to each other in the tire axial direction, such a block 6 can suppress a decrease in the stiffness in the tire circumferential direction of the block 6 upon wear and can improve the braking performance of the tire 1 upon wear.

## Claims

1. A tire (1) having a tread portion (2), wherein
a hexagonal sipe group (7) having a plurality of straight sipe pieces (7a) arranged so as to form a plurality of hexagons (H) is provided on the tread portion (2), and
the hexagonal sipe group (7) includes a first depth portion (8) and a second depth portion (9) having a smaller depth (d3) in a tire radial direction than the first depth portion (8), **characterized in that**
the first depth portion (8) includes, in the tire radial direction, at least one bent portion (8a) bent in a direction orthogonal to a longitudinal direction of the sipe piece (7a).

2. The tire (1) according to claim 1, wherein
the hexagonal sipe group (7) includes, as the plurality of hexagons (H), a first hexagon (H1) and a second hexagon (H2) adjacent to each other,
the plurality of sipe pieces (7a) include one first sipe piece (7b) forming part of the first hexagon (H1), one second sipe piece (7c) forming part of the second hexagon (H2), and a third sipe piece (7d) connecting the first sipe piece (7b) and the second sipe piece (7c), and
the first depth portion (8) is formed in a crank shape by the first sipe piece (7b), the second sipe piece (7c), and the third sipe piece (7d).

3. The tire (1) according to claim 2, wherein
a plurality of the first depth portions (8) are arranged so as to be spaced apart from each other in a tire circumferential direction, and
directions of cranks of a pair of the first depth portions (8) adjacent to each other in the tire circumferential direction are opposite to each other.

4. The tire (1) according to any one of claims 1 to 3, wherein the depth (d3) of the second depth portion (9) is 10% to 50% of a depth (d1) of the first depth portion (8).

5. The tire (1) according to any one of claims 1 to 4, wherein the first depth portion (8) includes, in the tire radial direction, a straight portion (8b) extending in a straight manner on an inner side in the tire radial direction with respect to the bent portion (8a).

6. The tire (1) according to claim 5, wherein a sipe width (w2) of the straight portion (8b) is larger than a sipe width (w1) of the bent portion (8a).

7. The tire (1) according to any one of claims 1 to 6, wherein the second depth portion (9) extends in a straight manner in the tire radial direction.

## Patentansprüche

1. Reifen (1) mit einem Laufflächenabschnitt (2), wobei
eine hexagonale Lamellengruppe (7) mit einer Vielzahl von geraden Lamellenstücken (7a), die so angeordnet sind, dass sie eine Vielzahl von Sechsecken (H) bilden, auf dem Laufflächenabschnitt (2) vorgesehen ist, und
die hexagonale Lamellengruppe (7) einen ersten Tiefenabschnitt (8) und einen zweiten Tiefenabschnitt (9) mit einer geringeren Tiefe (d3) in einer radialen Richtung des Reifens als der erste Tiefenabschnitt (8) umfasst,
**dadurch gekennzeichnet, dass**
der erste Tiefenabschnitt (8) in der radialen Richtung des Reifens mindestens einen gebogenen Abschnitt (8a) umfasst, der in einer Richtung orthogonal zu einer Längsrichtung des Lamellenstücks (7a) gebogen ist.

2. Reifen (1) nach Anspruch 1, wobei
die hexagonale Lamellengruppe (7) als die Vielzahl von Hexagonen (H) ein erstes Hexagon (H1) und ein zweites Hexagon (H2) umfasst, die zueinander benachbart sind,
die Vielzahl von Lamellenstücken (7a) ein erstes Lamellenstück (7b), das_einen Teil des ersten Sechsecks (H1) bildet, ein zweites Lamellenstück (7c), das einen Teil des zweiten Sechsecks (H2) bildet, und ein drittes Lamellenstück (7d) umfasst, das das erste Lamellenstück (7b) und das zweite Lamellenstück (7c) verbindet, und
der erste Tiefenabschnitt (8) durch das erste Lamellenstück (7b), das zweite Lamellenstück (7c) und das dritte Lamellenstück (7d) in einer Kurbelform ausgebildet ist.

3. Reifen (1) nach Anspruch 2, wobei
eine Vielzahl der ersten Tiefenabschnitte (8) so angeordnet sind, dass sie in einer Reifenumfangsrichtung voneinander beabstandet sind, und
Kurbelrichtungen eines Paars erster Tiefenabschnitte (8), die in der Reifenumfangsrichtung zueinander benachbart sind, einander entgegengesetzt sind.

4. Reifen (1) gemäß einem der Ansprüche 1 bis 3, wobei die Tiefe (d3) des zweiten Tiefenabschnitts (9) 10 % bis 50 % einer Tiefe (d1) des ersten Tiefenabschnitts (8) beträgt.

5. Reifen (1) gemäß einem der Ansprüche 1 bis 4, wobei der erste Tiefenabschnitt (8) in der Radialrichtung des Reifens einen geraden Abschnitt (8b) umfasst, der sich relativ zum gebogenen Abschnitt (8a) in gerader Weise auf einer Innenseite in der Radialrichtung des Reifens erstreckt.

6. Reifen (1) nach Anspruch 5, wobei eine Lamellenbreite (w2) des geraden Abschnitts (8b) größer ist als eine Lamellenbreite (w1) des gebogenen Abschnitts (8a).

7. Reifen (1) nach einem der Ansprüche 1 bis 6, wobei sich der zweite Tiefenabschnitt (9) in gerader Weise in der Radialrichtung des Reifens erstreckt.

## Revendications

1. Pneumatique (1) présentant une partie bande de roulement (2), dans lequel
un groupe (7) de lamelles hexagonales présentant une pluralité de pièces lamelles droites (7a) agencées de manière à former une pluralité d'hexagones (H) est prévu sur la partie bande de roulement (2), et
le groupe (7) de lamelles hexagonales inclut une première partie de profondeur (8) et une deuxième partie de profondeur (9) présentant une profondeur plus petite (d3) dans une direction radiale de pneumatique que la première partie de profondeur (8), **caractérisé en ce que**
la première partie de profondeur (8) inclut, dans la direction radiale de pneumatique, au moins une partie coudée (8a) coudée dans une direction orthogonale à une direction longitudinale de la pièce lamelle (7a).

2. Pneumatique (1) selon la revendication 1, dans lequel
le groupe (7) de lamelles hexagonales inclut, en tant que pluralité d'hexagones (H), un premier hexagone (H1) et un deuxième hexagone (H2) adjacents l'un à l'autre,
la pluralité de pièces lamelles (7a) inclut une première pièce lamelle (7b) formant une partie du premier hexagone (HI), une deuxième pièce lamelle (7c) formant une partie du deuxième hexagone (H2) et une troisième pièce lamelle (7d) reliant la première pièce lamelle (7b) et la deuxième pièce lamelle (7c), et
la première partie de profondeur (8) présente une forme de manivelle par la première pièce lamelle (7b), la deuxième pièce lamelle (7c) et la troisième pièce lamelle (7d).

3. Pneumatique (1) selon la revendication 2, dans lequel
une pluralité de premières parties de profondeur (8) sont agencées de manière à être espacées les unes des autres dans une direction circonférentielle de pneumatique, et
les directions de manivelles d'une paire des premières parties de profondeur (8) adjacentes l'une à l'autre dans la direction circonférentielle de pneumatique sont opposées l'une à l'autre.

4. Pneumatique (1) selon l'une quelconque des revendications 1 à 3, dans lequel la profondeur (d3) de la deuxième partie de profondeur (9) fait de 10 % à 50 % d'une profondeur (dI) de la première partie de profondeur (8).

5. Pneumatique (1) selon l'une quelconque des revendications 1 à 4, dans lequel la première partie de profondeur (8) inclut, dans la direction radiale de pneumatique, une partie droite (8b) s'étendant de manière droite sur un côté intérieur dans la direction radiale de pneumatique par rapport à la partie coudée (8a).

6. Pneumatique (1) selon la revendication 5, dans lequel une largeur de lamelle (w2) de la partie droite (8b) est plus grande qu'une largeur de lamelle (w1) de la partie coudée (8a).

7. Pneumatique (1) selon l'une quelconque des revendications 1 à 6, dans lequel la deuxième partie de profondeur (9) s'étend de manière droite dans la direction radiale de pneumatique.
